# EUROPÄISCHE PATENTANMELDUNG

(11) **EP 1 084 894 A2**
(43) Veröffentlichungstag der Anmeldung: **21.03.2001**
(21) Anmeldenummer: 00117707.0
(22) Anmeldetag: 17.08.2000
(51) Int. Cl.: B60K 37/06, B60K 35/00

(54) **Multimediaeinheit für ein Fahrzeug**

(30) Priorität: 20.08.1999 DE 19939631
(71) Anmelder: NOKIA MOBILE PHONES LTD., 02150 Espoo (FI)
(72) Erfinder: Wendling, Frank, 89155 Ehrbach (DE)
(74) Vertreter: TER MEER STEINMEISTER & PARTNER GbR

(57) **Zusammenfassung**

Die Erfindung betrifft eine Multimediaeinheit mit einem abnehmbaren Bedienteil (OS) für ein Fahrzeug. Die Multimediaeinheit steuert und realisiert Funktionskomponenten für verschiedene Medien und ist für den festen Einbau in die Armaturentafel eines Fahrzeugs vorgesehen.

Die Bedienfläche des abnehmbaren Bedienteils (OS), das ausserdem eine Antenne (A2), ein Mikrofon (MI1) und einen Telefonlautsprecher enthält, ist als berührungsempfindliches Display (TS) ausgeführt, welches im Zusammenwirken mit einem Prozessor im Bedienteil (OS) und einer Bedien- und Anzeigesoftware mindestens je eine an die einzustellende Funktionskomponente angepasste interaktive Benutzeroberfläche (F1) generiert. Jede Benutzeroberfläche weist im wesentlichen nur solche Betätigungs- und/oder Anzeigeelemente (E1 bis E4) auf, die sich auf die jeweils einzustellende Funktionskomponente beziehen.

## Beschreibung

Die Erfindung betrifft eine Multimediaeinheit mit einem abnehmbaren Bedienteil für ein Fahrzeug. Die Multimediaeinheit steuert und realisiert Funktionskomponenten für verschiedene Medien und ist für den festen Einbau in die Armaturentafel eines Fahrzeugs vorgesehen. Dabei ist beispielsweise eine Komponente der Unterhaltungselektronik, wie ein Rundfunkempfänger mit oder ohne Audioabspieler, mit mindestens einer Komponente für mobile Telekommunikation und/oder Verkehrstelematik kombiniert. Eine Funktionskomponente für mobile Telekommunikation ist in dieser Schrift ein Funktelefon für jede Art von Mobil- und Zellular-Funknetzen mit oder ohne Einrichtungen zum Senden und Empfangen von Text- und/oder Grafikdaten wie Telefax, E-Mail und anderen Daten. Komponenten für Verkehrstelematik ermöglichen dagegen eine interaktive Verkehrsleitung des Fahrzeugs, beispielsweise eine Routenführung mit Mitteln zur Positions- und Geschwindigkeitsbestimmung und zur Verkehrsinformation. Außerdem automatisiert Verkehrstelematik in Notfällen Hilfe. Die Telematikkomponente benutzt beispielsweise das bekannte Global Positioning System (GPS).
Im vorliegenden Fall kennzeichnet der Begriff 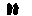 Funktionskomponente" funktionelle Schaltungselemente der Multimediaeinheit, die zum Benutzen eines Mediums, wie der Funktelefonie, benötigt werden. Mehrere Funktionskomponenten können dabei in einer mechanischen Einheit, beispielsweise einer Leiterplatte oder gar einer integrierten Schaltung, vereinigt sein. Ebenso kann eine Funktionskomponente räumlich getrennte funktionelle Schaltungselemente in verschiedenen Gehäusen enthalten.

Mit dem Fortschreiten der Entwicklung von Funktelefonie und Telematik gehören zur festen Ausrüstung in Kraftfahrzeugen neben einem Rundfunkempfänger auch weitere entsprechende Einzelgeräte oder Anlagenteile zur Nutzung der neuen Medien. Sowohl aus Gründen der Verkehrssicherheit als auch durch erweiterte Ausstattungsmerkmale technisch bedingt, werden Mobiltelefone oft als Autotelefon fest im Fahrzeug eingebaut. Dieses ermöglicht die gemeinsame Benutzung sowohl der leistungsstarken Tonwiedergabe beim Freihand-Telefonieren als auch der leistungsfähigen Stromversorgung des Fahrzeugs zum Anheben der Sendeleistung. Außerdem können die im Fahrzeug benötigten peripheren Elemente wie Fahrzeugantennen, Handgerät und die Einrichtung für Freihandtelefonie problemlos mit dem Autotelefon verbunden werden.
Da Telematik zusätzlich einen GPS-Empfänger, verschiedene Sensoren im Fahrzeug sowie eine Auswerteeinrichtung für die bereitstehenden Informationen benötigt, ist auch dafür ein Festeinbau erforderlich. Auf diese Weise sind im Fahrzeug zusätzlich technische Ausrüstungen mit einem großen Wert installiert, die ähnlich wie herkömmliche Rundfunkempfänger vor Dieben und im Falle des Funktelefons vor dem Gebrauch durch Unbefugte geschützt werden müssen.

Herkömmliche Autoempfänger verschiedener Hersteller sind oft mit einem abnehmbaren Bedienteil ausgestattet, das Betätigungselemente für Benutzereingaben enthält. Der Empfänger bzw. ein integriertes oder angeschlossenes Wiedergabeteil können nur mit diesem Bedienteil betrieben werden, so dass beim Mitnehmen des Bedienteils durch den Benutzer der im Fahrzeug verbleibende Rest der Anlage wertlos ist. Das Bedienteil an sich ist jedoch ebenfalls wertlos, so dass für den Benutzer wenig Anreiz besteht, dieses beim Parken des Fahrzeugs vom Autoempfänger zu entfernen und mitzunehmen.
Um diesen Mangel zu beheben, sind unter anderem aus den Druckschriften DE 43 17 385 A1 und DE 197 41 584 A1 Multimediaeinheiten bekannt, bei denen ein Autoempfänger zum Schutz vor Diebstahl ein abnehmbares Bedienteil aufweist, in dem ein Funktelefon integriert ist. D.h., neben den Bedienelementen für den Autoempfänger enthält das Bedienteil eine vollständige Telefonschaltung für ein Funknetz, wie ein Telefonmodul mit Batterie zur Stromversorgung, Mikrofon, Lautsprecher und Antenne. Damit hat das Bedienteil an sich für den Benutzer eine eigene sinnvolle Gebrauchsfunktion.
Die Bedienteile weisen in beiden Fällen mechanische Tasten auf, die teilweise alternativ sowohl zur Programmwahl des Autoempfängers als auch zum Wählen beim Funktelefon benutzt werden. Somit enthalten die Bedienteile für jede Betriebsart eine erhebliche Anzahl an Tasten, welche für die jeweils benutzte Medienfunktion nicht benötigt werden und daher ohne Funktion sind. Dieses begrenzt einerseits die Gebrauchsmerkmale auf wenige Grundfunktionen und/oder führt andererseits zur Unübersichtlichkeit der Bedienfläche. Darüber hinaus enthält jedes Bedienteil ein Display mit eigenem Displaytreiber, welches sowohl vom Autoempfänger als auch vom Funktelefon die Betriebszustände anzeigt. Letzteres unabhängig davon, ob dieses mit dem Autoempfänger verbunden ist. Sowohl das Bedienteil als auch die Multimediaeinheit weisen einen eigenen Mikroprozessor auf. Der Autoempfänger ist nur betriebsfähig, wenn nach dem Ankoppeln des Bedienteils beide Prozessoren mit einander kommunizieren.
Da beim Telefonieren das Handgerät gewöhnlich vertikal gehalten wird, weist eine Lösungsvariante gemäß der Druckschrift DE 43 17 385 A1 auf der Rückseite des Bedienteils noch eine weitere Bedienfläche mit mechanischen Eingabetasten auf, welche für die vertikale Betriebshaltung angeordnet und beschriftet sind, Im Gegensatz dazu soll dieses bei der Lösung gemäß DE 197 41 584 A1 dadurch erleichtert werden, dass die Beschriftung der Tastatur schräg angeordnet ist. Darüber hinaus ist bei dieser Lösung auch die Wiedergaberichtung der Zeichen auf dem Display zwischen vertikal und horizontal umschaltbar.

Darüber hinaus ist aus der Druckschrift DE 195 31 415 A1 eine schurlose Eingabeeinrichtung für Funktionskomponenten in einem Kraftfahrzeug bekannt, welche einerseits zur Bedienung dieser Komponenten und andererseits als schnurloser DECT-Telefonhörer benutzt werden kann. Die Bedienoberfläche des Eingabegerätes weist eine hochauflösende Eingabefläche auf. Darauf können durch Zeichnen mit einem Finger oder einem Stift alphanumerische Zeichen für Adress- oder Telefonlisten eingegeben werden. Außerhalb der Eingabefläche befinden sich mechanische Tasten für spezielle Bedienfunktionen, wie "Ein/Aus", "Löschen", "Aktivieren der Zeichenerkennung", "Speichern", ein Cursorkreuz und andere. Die Anbindung an ein Mobilfunknetz erfolgt über eine im Fahrzeug fest eingebaute DECT-Basisstation und einem GSM-Endgerät. Außer einem Fahrzeuginformationssystem, welches eine CPU ein eigenes Display und eigene Bedienelemente enthält, sind keine weiteren zusätzlichen Einrichtungen im Kraftfahrzeug zum Bedienen mit der Eingabeeinrichtung vorgesehen. Die Eingabeeinrichtung stellt weder ein unabhängig funktionierendes Mobilfunktelefon dar noch ist ein Bedienen zusätzlicher multimedialer Funktionskomponenten, wie Autoradioempfänger oder CD-Player vorgesehen. Dadurch ist ein wirksamer Schutz gegen Diebstahl und Benutzung durch Unbefugte und eine Erleichterung der Bedienung aller Funktionskomponenten der Multimediaausrüstung nicht gegeben.

Bekannte Geräte zum Einbau in den standardisierten Schacht eines herkömmlichen Autoempfängers weisen für die Tastatur nur eine begrenzte Fläche auf. Dieses führt zu erheblichen Einschränkungen der Ausstattungsmerkmale und/oder insbesondere im Fahrzeug zur schlechten Bedienbarkeit. Entweder enthält das Bedienteil viele kleine und unübersichtliche Einzeltasten oder nur wenige Tasten, die teilweise eine Mehrfachfunktion aufweisen und schwer zu kennzeichnen sind. Bei einem gemeinsamen Schutz aller Komponenten ist es außerdem nur schwer möglich, die Funktionskomponenten einer Multimediaeinheit in verschiedenem Ausstattungsumfang nach den Wünschen eines Fahrzeugkäufers zusammen zu stellen oder später zu ergänzen.

Es sind auch kompakte Funktelefone bekannt, welche als Einzelgerät ein Display mit Berührungssensoren, einen sogenannten 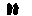 Touch screen", enthalten. Dieser füllt nahezu die gesamte Fläche des Bedienteils aus. Beispielhaft sei dafür das 1,5GHz 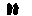 Digital Cellular Phone DP-211" der Firma Pioneer, JP, genannt. Das Display mit Berührungssensoren, die als Schalter wirken, realisiert neben herkömmlichen Telefonfunktionen, welche mit einer herkömmlichen Zifferntastatur und begrenzter alphanumerischer Anzeige ausführbar sind, auch zusätzliche Telefonfunktionen. Eine Menüführung, welche die Anzeige- und Betätigungselemente stets aktualisiert, ermöglicht die Eingabe der durch die japanische Sprache bedingten vielen Schriftzeichen in das bordeigene Telefonverzeichnis. Außerdem stellt die Firma einen Montagesatz zum Installieren des kompakten Funktelefons DP-211 auf die Armaturentafel eines Fahrzeugs her. Ein Grundgerät ohne eine weitere Funktionskomponente, das in den Standardschacht für einen herkömmlichen Autoempfänger an dessen Stelle eingebaut ist, ermöglicht im Fahrzeug die Freihandtelefonie und die Nutzung der Fahrzeugstromversorgung zum Laden der Akkus des Telefons. Wenn sich das DP-211 im Fahrzeug auf dem Grundgerät befindet, schaltet die Zeichendarstellung des Displays zwischen Hochformat und Querformat um.
Das Funktelefon DP-211 ist zwar ein vollwertiges mobiles Telefon, es fehlen jedoch alle Funktionen für andere Medien. Für den Rundfunkempfang ist ein herkömmlicher Autoempfänger in einem gesonderten Schacht erforderlich. Jedes Gerät benötigt somit einen eigenen Diebstahlschutz.

Ausgehend von den bekannten Lösungen ist es Aufgabe der Erfindung, eine Multimediaeinheit für ein Fahrzeug so auszugestalten, dass diese bei beliebigem Ausstattungsumfang mit Funktionskomponenten auf einfache Weise einen guten Schutz gegen Diebstahl und Benutzung durch Unbefugte erzielt und die Bedienung der Multimediaeinheit vereinfacht wird.

Die Erfindung geht von einer Multimediaeinheit mit Funktionskomponenten zum Benutzen verschiedener Medien aus, welche mindestens ein Grundgerät und ein abnehmbares Bedienteil aufweist. Das Bedienteil enthält eine Bedienfläche mit Betätigungselementen und mindestens einem Anzeigeelement zum Einstellen bzw. Anzeigen von Betriebszuständen sowie ein eigenes Prozessorsystem mit separater Software zum Betreiben von Funktionskomponenten. Im abnehmbaren Bedienteil ist ein Funktelefon integriert, um bei einem Nutzer des Fahrzeugs die Bereitschaft zu erhöhen, das Bedienteil beim Verlassen des Fahrzeugs zum Schutz aller Funktionskomponenten gegen Diebstahl und Benutzung durch Unbefugte mitzunehmen. Das Funktelefon im Bedienteil ist unabhängig von einem weiteren Prozessorsystem, das sich als Hauptsystem im Grundgerät befindet, an einem mobilen Funknetz benutzbar.

Die Aufgabe der Erfindung wird dadurch gelöst, dass die Bedienfläche des abnehmbaren Bedienteils als berührungsempfindliches Display ausgeführt ist, welches im Zusammenwirken mit dem Prozessor im Bedienteil und einer Bedien- und Anzeigesoftware mindestens je eine an die einzustellende Funktionskomponente angepasste interaktive Benutzeroberfläche generiert. Jede Benutzeroberfläche weist im wesentlichen nur solche Betätigungs- und/oder Anzeigeelemente auf, die sich auf die jeweils einzustellende Funktionskomponente beziehen. Ein wesentlicher Vorteil der Erfindung besteht also darin, dass ein einziges Bedienteil als multifunktionales Steuergerät nicht nur das Bedienen verschiedener Funktionskomponente im Fahrzeug ermöglicht, sondern dass dieses sogar Benutzeroberflächen generiert, welche in der optischen Erscheinungsform dem der bekannten Funktionskomponenten entsprechenden. Das heißt, einerseits stellt das Bedienteil im abgenommenen Zustand ein in seiner Funktion und äußeren Erscheinung vollwertiges Funktelefon dar, das eine Benutzeroberfläche aufweist, die der Benutzer bereits von herkömmlichen Geräten kennt. Andererseits generiert der Prozessor des Bedienteils auf Abruf im Fahrzeug eine komfortable Benutzeroberflächen für eine andere Funktionskomponente des Fahrzeugs, die keineswegs mehr an ein Telefon erinnert. Der Fahrzeugnutzer stellt seinen Autoempfänger beispielsweise nicht mit einer erweiterten und ungewohnten Telefontastatur ein, sondern sieht dafür das gewohnte Bild eines Autoempfängers mit einer übersichtlichen Benutzeroberfläche.

Das Prozessorsystem im Bedienteil ist vom Hauptsystem im Grundgerät unabhängig betriebsfähig und realisiert im Zusammenspiel mit dem berührungsempfindlichen Display die direkte Steuerung des Telefonmoduls mit allen Komfortmerkmalen. Darüber hinaus steuert es zumindest indirekt die zu schützenden Funktionskomponenten der Multimediaeinheit.

Gemäß der Erfindung enthält ein nichtflüchtiger Speicher dafür zusätzlich entsprechende Bedien- und Anzeigesoftware, die Benutzeroberflächen für beliebige andere Funktionskomponenten intelligent generiert. Die Bedien- und Anzeigesoftware besteht vorteilhaft aus einzelnen Softwarekomponenten für entsprechende Funktionskomponenten der Multimediaeinheit. Dieses hat den Vorteil, dass im Bedienteil einerseits nur die Bedien- und Anzeigesoftware installiert bzw. aktiviert ist, für die im Fahrzeug gemäß des gewünschten Ausstattungsumfangs des Fahrzeugkäufers entsprechende Funktionskomponenten vorhanden sind. Andererseits kann nach dem Erweitern der Multimediaeinheit Bedien- und Anzeigesoftware für neue Funktionskomponenten durch Hinzufügen von Hard und/oder Software problemlos in das bereits vorhandene Bedienteil installiert oder durch Überschreiben der Software aktualisiert werden. Somit stehen für die Bedienung der Multimediaeinheit immer optimal gestaltete Benutzeroberflächen bereit. Selbst das Generieren von Benutzeroberflächen für Funktionskomponenten, die zum Zeitpunkt der Fertigung der Multimediaeinheit noch unbekannt waren, ist durch nachträgliche Installation möglich.

Entsprechend einer weiteren Ausgestaltung der Erfindung weist das Prozessorsystem im Bedienteil Softwaremittel auf, welche auch im abgenommenen Zustand für verschiedene Medien entsprechende Benutzeroberflächen und Eingabedialoge generieren.

Nach einer weiteren vorteilhaften Ausgestaltung der Erfindung erfolgt Datenkommunikation zwischen dem Prozessorsystem im Bedienteil und dem Hauptsystem über eine drahtlose Datenverbindung. Dafür kann beispielsweise eine Infrarotschnittstelle oder eine Funkschnittstelle verwendet werden. Letztere ist unter dem Namen "Bluetooth" zumindest in Europa im 2,4-GHz-Band, ohne Lizenz für Industrie, Wissenschaft und Medizin (ISM-Anwendung) verfügbar. Damit können mit dem Bedienteil Voreinstellungen von Funktionskomponenten ohne Kopplung mit dem Grundgerät auch außerhalb des Fahrzeugs oder sogar interaktiv von einem anderen Platz im Fahrzeug programmiert und gespeichert werden. So kann beispielsweise eine Fahrtroute für das Verkehrsleitsystem bequem vor Fahrtantritt oder während der Fahrt von einer zweiten Person programmiert werden.
Da die erwähnte Funkschnittstelle eine Reichweite von etwa 10 Meter aufweist, kann nach einem weiteren Merkmal der Erfindung, das Bedienteil der Multimediaeinheit auch als Fernbediensender für weitere Zusatzfunktionen im Zusammenhang mit einem Fahrzeug ausgeführt sein. Derartige Zusatzfunktionen können beispielsweise das Betätigen der Sperriegel für Fahrzeugtüren und Kofferraumklappen, das Aktivieren/Deaktivieren des Diebstahlschutzes, das Einschalten von Fahrzeugbeleuchtung, Bremslicht und Ähnliches von außerhalb zwecks Funktionstest oder das Betätigen von Garagentoren sein. Dieses bringt eine hohe Sicherheit für den Diebstahlschutz, weil vor dem Betätigen des entsprechenden Funktion zwischen dem Grundgerät und dem Bedienteil interaktiver Datenaustausch zur gegenseitigen Identifikation unter Verwendung eines Codesystems mit hoher Sicherheit stattfindet.

Die Erfindung soll nachstehend an einem Ausführungsbeispiel erläutert werden. Entsprechende Figuren zeigen im Einzelnen:
- FIG. 1: ein Blockschaltbild für eine Multimediaeinheit
- FIG. 2: eine erste Draufsicht auf das Grundgerät der Multimediaeinheit mit dem abnehmbaren Bedienteil und dem berührungsempfindlichen Display, welches eine erste Benutzeroberfläche für den Grundzustand der Einheit generiert
- FIG. 3: eine zweite Draufsicht auf das Grundgerät mit dem abnehmbaren Bedienteil und dem berührungsempfindlichen Display, das eine Benutzeroberfläche für den Rundfunkempfang generiert
- FIG. 4a: eine Draufsicht auf das Grundgerät, ohne Bedienteil
- FIG. 4b: eine Draufsicht auf das abgenommene Bedienteil, bei dem das berührungsempfindliche Display eine Benutzeroberfläche für ein Funktelefon generiert.

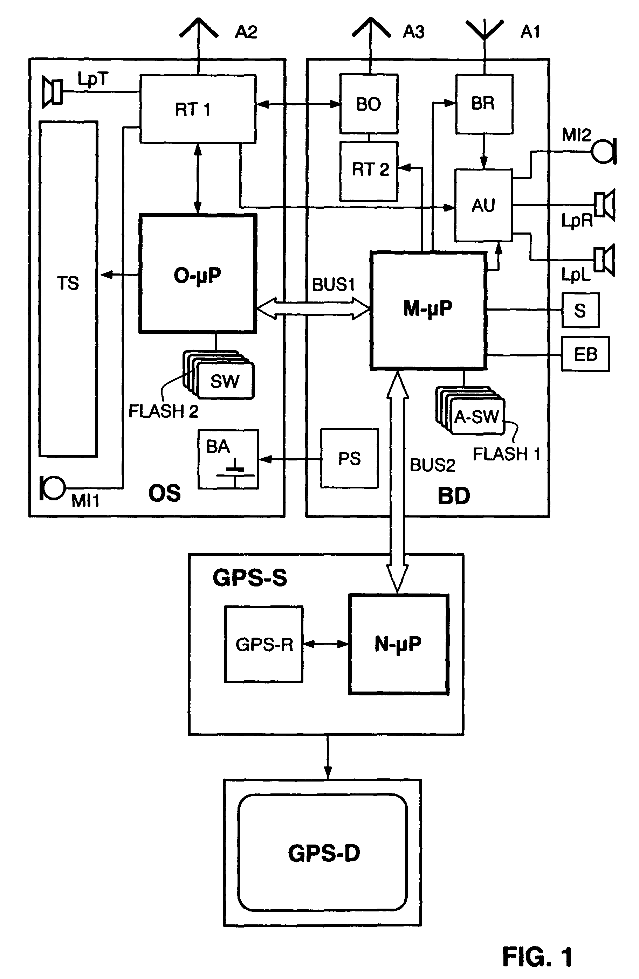

FIG. 1 zeigt ein Blockschaltbild für eine mögliche Ausführung einer Multimediaeinheit. Im Interesse der Übersichtlichkeit wird eine Multimediaeinheit mit wenigen Funktionskomponenten dargestellt. Die Anzahl kann in der Praxis jedoch beliebig erweitert werden. Mit dem dargestellten Lösungsprinzip können alle Funktionskomponenten gleichartig geschützt werden. Der linke obere Teil der Zeichnung zeigt ein Grundgerät BD für den festen Einbau in die Armaturentafel eines Fahrzeugs. Das Grundgerät BD enthält unter anderem ein Rundfunkmodul BR mit einer Empfangsantenne A1 und ein Audiomodul AU. Das Audiomodul AU ist mit Stereolautsprechern LpR und LpL verbunden und weist Leistungsverstärker für die Audiowiedergabe, übliche Einstellmittel zum Einstellen der Tonwiedergabe sowie ein CD/CD-ROM-Laufwerk auf. Sowohl das Rundfunkmodul BR als auch das Audioteil AU werden im vorliegenden Beispiel im wesentlichen von einem Hauptprozessor M-µP gesteuert. An Stelle eines einzelnen Hauptprozessors M-µP können jedoch auch mehrere speziell konzipierte Einzelprozessoren treten, welche im Verbund unter Kontrolle eines Prozessors separat Aufgaben für einzelne Funktionskomponenten erfüllen.
Der Hauptprozessor M-µP ist außer mit einem Arbeitsspeicher, der in den Figuren nicht gezeigt ist, auch mit einem nichtflüchtigen Schreib/Lesespeicher FLASH 1, beispielsweise einem Flash Memory verbunden. Diese werden nachfolgend als Hauptsystem bezeichnet. Im nichtflüchtigen Speicher FLASH 1 liegt unter anderem ein Paket mit Programmsoftware A-SW für den Rundfunkempfang. Diese stellt zum einen automatisch Rundfunkstationen ein und wertet zum anderen programmbegleitende Information aus, welche über einen Rundfunkkanal kommt, wie die Verkehrsfunkinformation ARI, das Radio Data System RDS und den Verkehrsnachrichtenkanal TMC. Ebenso sind dort auch Daten für einen Stationsspeicher gesichert. Die bis hier beschriebene Schaltung entspricht dem Aufbau eines Autoempfängers und stellt im Sinne dieser Beschreibung eine Funktionskomponente dar. Darüber hinaus enthält der nichtflüchtige Speicher FLASH 1 im vorliegenden Beispiel unter anderem auch Programmsoftware A-WS, die gemeinsam mit dem Audioteil AU und dem CD/CD-ROM-Laufwerk eine Funktionskomponente 〉〉CD-Spieler〈〈 realisiert. Beide Funktionskomponenten enthalten jedoch noch keine Mittel zur Kommunikation mit dem Nutzer und sind damit für sich allein wertlos.

Im Gegensatz zu bekannten Lösungen realisiert der Hauptprozessor M-µP im Grundgerät BD im Zusammenspiel mit einem Navigationsgerät GPS-D, dem Funktelefon und/oder dem CD/CD-ROM-Laufwerk auch die Funktionskomponente 〉〉Verkehrsleitsystem〈〈. Dazu ist der Hauptprozessor M-µP sowohl mit einem Modul eines Telematikdienstanbieters zum Identifizieren des Fahrzeugeigentümers, einer Notfall-SIM-Karte, als auch über einen weiteren Datenbus BUS 2 mit dem Navigationsgerät GPS-D verbunden. Das Navigationsgerät GPS-D gibt auf Abruf durch den Hauptprozessor M-µP die aktuelle lokale Fahrzeugposition an und enthält einen Satellitenempfänger GPS-R für GPS-Signale sowie einen Navigatorprozessor N-µP, der diese Signale auswertet und die aktuelle Fahrzeugposition berechnet. Der Hauptprozessor M-µP ruft Daten für eine gewünschte Fahrtroute von einer CD-ROM oder über eine Datenverbindung via Funktelefon ab und übermittelt an Hand der aktuellen Position dem Fahrzeugführer optisch und/oder akustisch Hinweise zur weiteren Fahrt. Auch diese Funktionskomponente enthält noch keine Mittel zum Kommunizieren mit dem Nutzer und ist damit für sich allein ebenfalls wertlos.

Zum Betreiben aller genannten Funktionskomponenten ist unbedingt ein Datenaustausch zwischen dem Hauptprozessor M-µP und einem weiteren Prozessor, einem Prozessor O-µP, erforderlich, der unter anderem mit einer Bedien- und Anzeigesoftware SW entsprechend der Ausstattung des Fahrzeugs mit Funktionskomponenten betrieben wird.

Gemäß der Erfindung befindet sich der Prozessor O-µP gemeinsam mit einem berührungsempfindlichen Display TS in einem Bedienteil OS, das abnehmbar am Grundgerät BD angebracht ist und ist mit einem nichtflüchtigen Speicher FLASH 2 verbunden, der im Gegensatz zum FLASH 1 des Hauptprozessors M-µP für alle Funktionskomponenten der Multimediaeinheit Bedien- und Anzeigesoftware SW enthält. Sowohl das Hauptsystem als auch das Prozessorsystem im Bedienteil OS enthalten Software zum gegenseitigen Identifizieren, um sicher zu stellen das die Funktionskomponenten nur mit dem entsprechenden Bedienteil OS bedienbar sind.

Um verschiedene Ausstattungsgrade der Multimediaeinheit mit Funktionskomponenten, ein einfaches Anpassen beim Nachrüsten und ein späteres Aktualisieren zu ermöglichen, besteht die Bedien- und Anzeigesoftware SW vorteilhaft aus separat installierten Softwarekomponenten. Eine Kundendienstwerkstatt kann jederzeit über den Datenbus BUS 1 die Bedien- und Anzeigesoftware SW im Prozessorsystem des Bedienteil OS aktualisieren und ergänzen. Zum Aktualisieren kann natürlich auch der nichtflüchtige Speicher, in einem solchen Fall ein ROM, getauscht werden. Das Bedienteil OS weist außerdem noch ein Sende/Empfängermodul RT 1 auf, an dem eine Gehäuseantenne A2, ein Telefonlautsprecher LpT und ein Mikrofon MI1 angeschlossen sind. Diese ermöglichen gemeinsam mit dem Prozessor O-µP, dem berührungsempfindlichen Display TS und der Batterie BA, das Bedienteil OS unabhängig vom Grundgerät BD als Funktelefon zu benutzen. Die Steuerung des Sende/Empfängermoduls RT 1 kann auch ein speziell für die Telekommunikation entworfener Prozessor übernehmen, der für den Prozessor O-µP als Co-Prozessor arbeitet.
Im angekoppelten Zustand wird wie bei den bekannten Lösungen die Batterie aus der Stromversorgung PS des Grundgerätes BD geladen.
Der Aufbau einer Telefonverbindung über ein Mobilnetz erfordert bekanntlich ein Modul des Netzbetreibers, eine Nutzer-SIM-Karte, zum Identifizieren des Telefonteilnehmers. Das Bedienteil OS enthält ebenfalls dieses Modul und stellt an sich ein vollwertiges mobiles Funktelefon mit allen Komfortfunktionen dar, das eine von herkömmlichen mobilen Telefonen gewohnten Benutzeroberfläche aufweist, ohne Betätigungselemente, die beim Telefonieren keine Funktion erfüllen. Sowohl innerhalb als auch außerhalb des Fahrzeugs ist das Telefon bei gleichem Dienstumfang und gleicher Nutzerdatenbank nur mit einer Zugangsberechtigung betriebsfähig. Ein Abnehmen des Bedienteils OS schützt damit gleichzeitig die Nutzer-SIM-Karte vor Diebstahl und Missbrauch.
Da die Gehäuseantenne A2 vom Bedienteil OS im angekoppelten Zustand im Fahrzeuginneren an einem für die Übertragung ungünstigen Standort liegt, wird diese beim Ankoppeln vom Sende/Empfangsmodul RT 1 getrennt und eine Verbindung zu einem HF-Treiber BO hergestellt. Dieser erhöht die Sendeleistung und realisiert die Telefonverbindung mit Hilfe einer Fahrzeugantenne A3, welche sich an einem Standort für besonders günstigen Sende/Empfang befindet und eine wesentlich bessere Übertragung ermöglicht. Am Ausgang des HF-Treibers BO kann zur Auswahl zwischen mehreren Fahrzeugantennen, z.B. einer Hauptantenne und einer Notantenne, auch ein automatischer Antennenwahlschalter liegen.

Ausserdem ist das Sende/Empfangsmodul RT 1 mit dem Audioteil AU verbunden. Dieses ermöglicht über die Stereolautsprecher LpR und LpL und einem zweiten Mikrofon MI 2 AU Freihandtelefonie, um ein Ablenken des Fahrers während der Fahrt zu vermeiden. Da der Prozessor O-µP im wesentlichen die Funktionskomponente 〉〉Autotelefon〈〈 steuert ist auch dafür ein sicherer Schutz durch Mitnehmen des Teils gegeben.

Das Ausführen von Not- und Hilferufen und/oder Übertragen von Fahrzeugdaten muss von Bord des Fahrzeugs ständig möglich sein. Der Aufbau einer Telefon- und/oder Datenverbindung zu einem Notdienst oder einem Telematikdienstanbieter erfolgt unabhängig davon, ob das Bedienteil OS mit dem Grundgerät BD gekoppelt ist. Dazu stellt der Hauptprozessor M-µP mit Hilfe der Notfall-SIM-Karte, einem zweiten Sende/Empfangsmodul RT 2 und dem HF-Treiber BO direkt, also unabhängig von der Anwesenheit des Bedienteils OS und dessen Einstellungen, eine entsprechende Verbindung her. Am Hauptprozessor M-µP sind Sensoren 5 angeschlossen, welche automatisch das Erstellen einer Telefonverbindung für einen Not- oder Hilferuf bewirken, wenn sich das Fahrzeug in einer Notsituation befindet. Für die Sprechverbindung werden dann die Lautsprecher LpR, LpL und das Mikrofon MI 2 des Audioteils AU benutzt.
Am Grundgerät BD befindet sich außerdem ein mechanischer Notrufknopf. Mit diesem kann ebenfalls unabhängig vom Bedienteil OS manuell eine Verbindung für einen Not- oder Hilferuf hergestellt werden, In Verbindung mit dem Navigationsgerät GPS-D kann selbst dann die Kennung des Fahrzeugeigentümers und die aktuelle Fahrzeugposition dem Telematikdienstanbieter übermittelt werden, wenn das Bedienteil OS vom Grundgerät BD getrennt oder die Nutzer-SIM-Karte entfernt wurde. Dieses ermöglicht bei einem Unfall oder Fahrzeugdiebstahl die Suche und Ortung des Fahrzeuges ohne Mitwirken der Insassen.

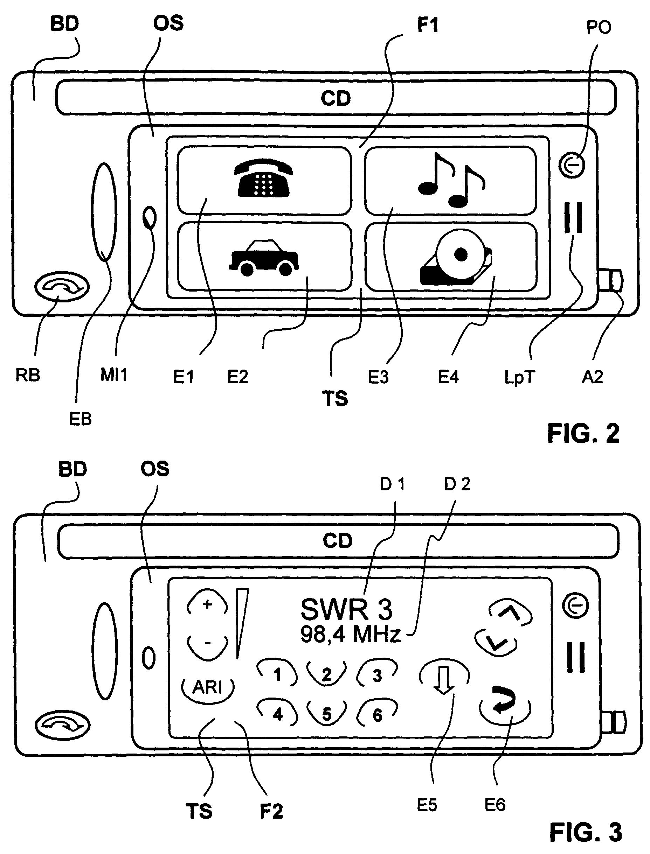

Die Figuren FIG. 2 und 3 zeigen eine Draufsicht auf das Grundgerät BD der Multimediaeinheit mit angekoppeltem Bedienteil OS. Die Frontfläche des Grundgerätes BD zeigt neben dem Bedienteil OS eine Ladeklappe des CD/CD-ROM-Laufwerks CD, einen Entriegelungsknopf RB zum Lösen des Halters vom Bedienteil OS und einen Notrufknopf EB. Der Bildschirm des berührungsempfindlichen Displays TS belegt den überwiegenden Teil der Oberfläche des Bedienteils OS. Außerdem zeigt das Bedienteil OS die Gehäuseantenne A2, einen mechanischen Ein/Ausschalter PO sowie Gehäuseöffnungen für das Mikrofon MI1 und den Telefonlautsprecher LpT.

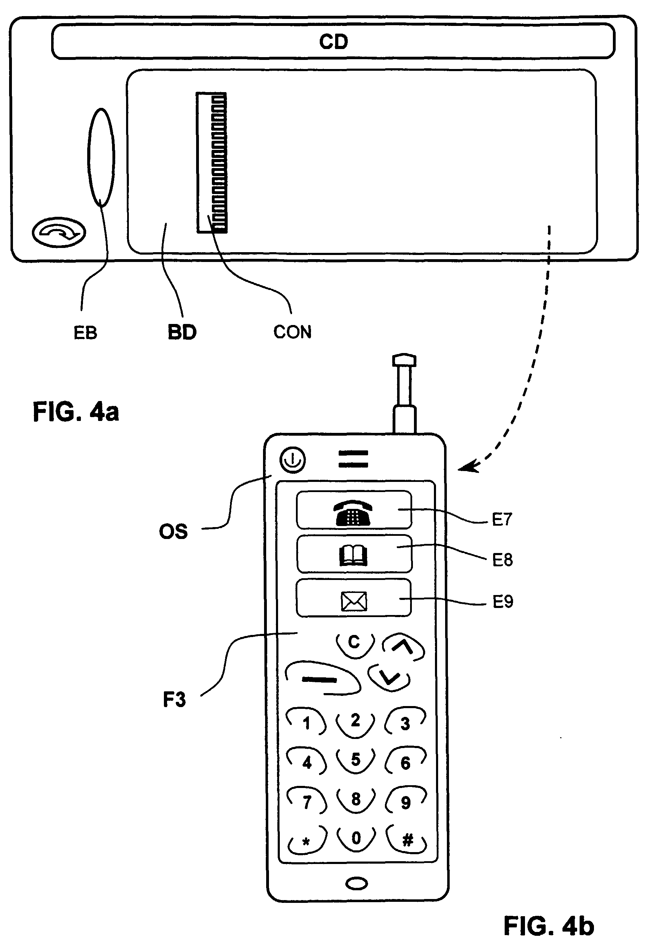

FIG. 4a zeigt eine Draufsicht auf das Grundgerät BD der Multimediaeinheit ohne Bedienteil OS. Erkennbar sind elektrische Verbindungskontakte CON, welche das Grundgerät BD und das Bedienteil OS elektrisch miteinander verbinden. Die Verbindungskontakte CON stellen alle in FIG. 1 gezeigten Verbindungen, wie die HF-Verbindung zum HF-Treiber BO, die Audioverbindung zum Audioteil AU, die Leitung zur Stromversorgung PS und den Datenbus BUS1 bereit. Mit dem Notrufknopf EB kann unabhängig davon, ob das Bedienteil OS mit dem Grundgerät BD verbunden ist, eine Funktelefonverbindung zu einem Notdienst oder einem Telematikdienstanbieter aufgebaut werden.

Wie die Figuren FIG. 2, 3 und 4b zeigen, generiert die Anzeigesoftware SW mit Hilfe des berührungsempfindlichen Displays TS für jede Funktionskomponente eine eigene interaktive Benutzeroberfläche F1, F2, F3, welche jeweils an die einzustellende Funktionskomponente angepasst ist. Nach dem Ankoppeln an das Grundgerät BD generiert der Prozessor O-µP eine erste interaktive Benutzeroberfläche F1. Diese stellt ein Hauptmenü zum Auswählen einer Funktionskomponente bereit, um zum Bedienen der ausgewählten Funktionskomponente weitere interaktive Benutzeroberflächen F2, F3 für das berührungsempfindliche Display TS zu generieren. Die Benutzeroberfläche F1 zeigt Betätigungselemente E1, E2, E3, E4 zum Auswählen einer der Funktionskomponenten 〉〉Autotelefon〈〈 (E1), 〉〉Verkehrstelematik〈〈 (E2), 〉〉Autoempfänger〈〈 (E3) und 〉〉CO-Spieler〈〈 (E4). Sollte die Multimediaeinheit um eine Funktionskomponente, beispielsweise 〉〉TV-Empfang〈〈, erweitert werden, so ist zusätzliche Bedien- und Anzeigesoftware SW zu installieren. Sowohl im Bedienteil OS als auch im Grundgerät BD sind ein Betriebssystem installiert, die beim Hinzufügen von Funktionskomponenten ihre eigene Konfiguration aktualisieren, so dass der Prozessor O-µP die Struktur der interaktiven Benutzeroberfläche F1 reorganisiert und ein fünftes Betätigungselement zum Aufrufen der Funktionskomponente 〉〉TV-Empfang〈〈 einfügt. Mit der ersten Benutzeroberfläche F1 können gegebenenfalls auch weitere Untermenüs aufgerufen werden. Dabei können beispielsweise die Funktionskomponenten 〉〉Autoempfänger〈〈 (E3) und 〉〉CD-Spieler〈〈 (E4) in einem Untermenü zusammengefasst werden und das Betätigungselement E4 für die Auswahl von 〉〉TV-Empfang〈〈 konfiguriert werden.

FIG. 3 zeigt eine Benutzeroberfläche F2, die der Prozessor O-µP nach dem Betätigen des Betätigungselementes E3 generiert. In diesem Fall dient das berührungsempfindliche Displays TS zum Einstellen des 〉〉Autoempfängers〈〈. Die Benutzeroberfläche F2 weist anstelle der Betätigungselemente E1 bis E4 solche auf, die für den Rundfunkempfang nötigt sind. Darüber hinaus werden Anzeigeelemente D1 und D2 zum Anzeigen der eingestellten Rundfunkstation und weitere Betätigungselemente E5 und E6 zum Wechsel in Untermenüs bzw. zur Rückkehr in das Hauptmenü generiert. In einem nicht dargestellten Untermenü stellt beispielsweise eine weitere interaktive Benutzeroberfläche bei einer Reduktion der Anzahl der Betätigungselemente großflächige Anzeigeelemente zur Darstellung der Verkehrsinformation eines Verkehrsnachrichtenkanals TMC dar.

FIG. 4 b zeigt die interaktive Benutzeroberfläche F3, welche sich automatisch beim Abkoppeln des Bedienteils OS vom Grundgerät einstellt. Diese weist gegenüber der Benutzeroberfläche F2 typische Betätigungselemente eines kompakten Mobiltelefons auf. Dabei wechselt das berührungsempfindliche Display TS von einer horizontal lesbare in eine vertikal lesbare Beschriftung der Benutzeroberfläche F3. An die Stelle der üblichen Anzeige von Telefoneinstellungen befinden sich weitere Betätigungselemente E7 bis E9. Diese dienen als Auswahltasten für die Untermenüs 〉〉Telefonieren〈〈, 〉〉persönliches Telefortverzeichnis〈〈 und 〉〉E-mail〈〈. Nach der Auswahl eines entsprechenden Untermenüs wird die Struktur der Benutzeroberfläche F3 weiter an die Erfordernisse einer Bedienung im Fahrzeug angepasst.

Die Erfindung ist nicht nur auf das dargestellte Beispiel beschränkt. Sowohl das Verlagern von Bedien- und Anzeigesoftware in das Prozessorssystem des Bedienteils OS zum Generieren von interaktiven Benutzeroberflächen als auch die erwähnte Erkennungssoftware zum gegenseitigen Identifizieren von Hauptsystem im Grundgerät BD und dem Prozessorsystem bieten bei Mitnahme des Bedienteils OS nach dem Parken eines Fahrzeugs einerseits für alle im Fahrzeug installierte Funktionskomponenten einen hohen Schutz. Andererseits ist durch einfache Möglichkeit zum Konfigurieren eine Anpassung an verschiedenen Ausstattungsumfang der Multimediaeinheit sowie ein hoher Bedienungskomfort und eine leichte Bedienbarkeit gegeben.

## Patentansprüche

1. Multimediaeinheit mit Funktionskomponenten (RT, BR, AU, GPS-S) zum Benutzen verschiedener Medien in einem Fahrzeug, welche mindestens ein Grundgerät (BD) und ein abnehmbares Bedienteil (OS) aufweist und bei der das Bedienteil (OS) enthält:
ein vom Grundgerät (BD) unabhängig benutzbares Funktelefon mit Mitteln zum direkten Zugang zu einem Funknetz und Mitteln zum Identifizieren des Telefonteilnehmers,
eine Bedienfläche mit Betätigungselementen (E1 bis E9) zum Aufrufen und Einstellen von Funktionen und mindestens einem Anzeigeelement (D1, D2) zum Anzeigen von Betriebszuständen der Funktionskomponenten (RT, BR, AU, GPS-S) und
ein Prozessorsystem (O-µP, FLASH 2) mit separater Bedien- und Anzeigesoftware (SW) zum Betreiben und Steuern von verschiedenen Funktionskomponenten (RT, BR, AU, GPS-S),
dadurch gekennzeichnet, dass die Bedienfläche ein berührungsempfindliches Display (TS) ist, welches im Zusammenwirken mit dem Prozessorsystem (O-µP, FLASH 2) und der Bedien- und Anzeigesoftware (SW) eine jeweils an die einzustellende Funktionskomponente angepasste interaktive Benutzeroberfläche (F1, F2, F3) so intelligent generiert, dass diese im wesentlichen jeweils nur solche Betätigungs- und/oder Anzeigeelemente (E1 bis E8, D1, D2) aufweist, die sich auf die einzustellende Funktionskomponente (RT, BR, AU, GPS-S) beziehen.

2. Multimediaeinheit nach Anspruch 1, dadurch gekennzeichnet, dass die Funktionskomponenten Mittel zum Empfangen und Wiedergeben von Hörrundfunksendungen und Mittel zum Abspielen von Audio- und/oder Videoaufzeichnungen enthalten, welche so mit dem abnehmbaren Bedienteil (OS) verbunden sind, dass deren Bedienung ausschließlich über das Bedienteil (OS) erfolgt.

3. Multimediaeinheit nach Anspruch 1, dadurch gekennzeichnet, dass das Prozessorsystem (O-µP, FLASH 2) unabhängig von einem Hauptsystem (M-µP, FLASH 1) des Grundgerätes (BD) betriebsfähig ist und im Zusammenwirken mit dem berührungsempfindlichen Display (TS) die direkte Steuerung des Telefonmoduls (RT) und zumindest indirekt die Steuerung von Bedienung und Betriebsanzeige für Funktionskomponenten (RT, BR, AU, GPS-S) der Multimediaeinheit realisiert.

4. Multimediaeinheit nach Anspruch 1, dadurch gekennzeichnet, dass die Bedien- und Anzeigesoftware (SW) für die entsprechenden Funktionskomponenten der Multimediaeinheit aus einzelnen Softwarekomponenten besteht, welche entsprechend des Ausstattungsumfangs der Multimediaeinheit mit Funktionskomponenten (RT, BR, AU, GPS-S) installiert sind.

5. Multimediaeinheit nach Anspruch 4, dadurch gekennzeichnet, dass das Bedienteil (OS) Mittel aufweist, mit dem die installierte Bedien- und Anzeigesoftware (SW) für einzelne Funktionskomponenten ergänzt und erweitert werden kann.

6. Multimediaeinheit nach Anspruch 1, dadurch gekennzeichnet, dass zumindest das Prozessorsystem (O-µP, FLASH 2) des Bedienteils (OS) und das Hauptsystem (M-µP, FLASH 1) vom Grundgerät (BD) Erkennungssoftware zur gegenseitigen Identifikation aufweisen.

7. Multimediaeinheit nach Anspruch 1, dadurch gekennzeichnet, dass das Grundgerät (BD) Mittel (EB, S, M-µP, RT 2, BO, A3) enthält, die ohne Mitwirkung des Bedienteils (OS) eine Funktelefonverbindung zu einem Hilfsdienst zum Ausführen von Hilfe- und oder Notrufen aufbauen.

8. Multimediaeinheit nach Anspruch 7, dadurch gekennzeichnet, dass ausschließlich das abnehmbare Bedienteil (OS) die Mittel zum direkten Zugang zu einem Funknetz und die Mittel zum Identifizieren des Telefonteilnehmers enthält.

9. Multimediaeinheit nach Anspruch 1, dadurch gekennzeichnet, dass nach dem Ankoppeln des Bedienteils (OS) an das Grundgerät (BD) das Prozessorsystem (O-µP, FLASH 2) eine erste interaktive Benutzeroberfläche (F1) mit einem Hauptmenü bereitstellt, mit dem eine Funktionskomponente (RT, BR, AU, GPS-S) ausgewählt werden kann, um danach zum Bedienen der ausgewählten Funktionskomponente weitere interaktive Benutzeroberflächen (F2, F3) für das berührungsempfindliche Display (TS) aufzurufen, die in Struktur, Funktionalität und die Erscheinungsform optimal an die ausgewählte Funktionskomponente (RT, BR, AU, GPS-S) angepasst sind.

10. Multimediaeinheit nach Anspruch 1, dadurch gekennzeichnet, dass das Prozessorsystem (O-µP, FLASH 2) beim Abnehmen des Bedienteils (OS) vom Grundgerät (BD) die Struktur und die Erscheinungsform der interaktiven Benutzeroberfläche (F1, F2) an die von einem Benutzer eines Funktelefons gewohnte Benutzeroberfläche (F3) anpasst.

11. Multimediaeinheit nach Anspruch 10, dadurch gekennzeichnet, dass beim Abnehmen des Bedienteils (OS) vom Grundgerät (BD) das berührungsempfindliche Display (TS) von einer horizontal lesbare in eine vertikal lesbare Beschriftung der Benutzeroberfläche (F3) wechselt.

12. Multimediaeinheit nach Anspruch 1, dadurch gekennzeichnet, dass das Prozessorsystem (O-µP, FLASH 2) Softwaremittel (SW) aufweist, die auch im abgenommenen Zustand für verschiedene Funktionskomponenten (RT, BR, AU, GPS-S) entsprechende Benutzeroberflächen (F2, F3) bereitstellen, um ohne Kopplung mit dem Grundgerät (BD) Voreinstellungen programmieren und speichern zu können.

13. Multimediaeinheit nach Anspruch 12, dadurch gekennzeichnet, dass Datenkommunikation zwischen dem Hauptsystem im Grundgerät (BD) und dem Prozessorsystem im Bedienteil (OS) über eine drahtlose Datenverbindung (BUS1) erfolgt, um mit dem abgekoppelten Bedienteil (OS) an Komponenten der Multimediaeinheit interaktiv Einstellungen vornehmen zu können.

14. Multimediaeinheit nach Anspruch 13, dadurch gekennzeichnet, dass das Bedienteil (OS) zusätzlich als interaktiver Fernbediensender für weitere Zusatzfunktionen im Zusammenhang mit dem Fahrzeug ausgeführt ist.
